# FASCICULE DE BREVET EUROPEEN

(11) **EP 0 638 270 B1**
(45) Date de publication et mention de la délivrance du brevet: **04.03.1998**
(21) Numéro de dépôt: 94460027.9
(22) Date de dépôt: 02.08.1994
(51) Int. Cl.: A47J 27/20

(54) **Ensembles empilables de récipients destinés à contenir des produits alimentaires pendant leur cuisson**
Stapelbare Haltevorrichtungen für Behälter zum Kochen von Nahrungsmitteln
Stockable sets of vessels for cooking food

(30) Priorité: 06.08.1993 FR 9309937
(43) Date de publication de la demande: 15.02.1995
(73) Titulaire: ARMOR INOX SA, F-56430 Mauron (FR)
(72) Inventeur: Dreano, Claude, F-56430 Mauron (FR)
(74) Mandataire: Le Guen, Louis François

(56) Documents cités:
- EP-A- 0 292 417
- DE-C- 473 003
- DE-C- 607 046
- DE-C- 3 529 658
- FR-A- 984 170
- US-A- 3 155 030
- US-A- 4 386 451

## Description

La présente invention concerne des ensembles empilables de récipients destinés à contenir des produits alimentaires pendant leur cuisson. Les produits qui sont cuits dans de tels ensembles sont, par exemple, des jambons, les récipients servant alors aussi de moules.

La cuisson industrielle de jambons se fait généralement dans des cellules de volume relativement important contenant un fluide caloporteur en circulation ou non. Les jambons sont mis dans des récipients portés par des supports étagés que l'on déplace généralement empilés sur un chariot. On pourra à ce sujet se reporter aux documents EP-A-0 070 228 et EP-A-0 334 782.

Dans un procédé récent de chargement et de déchargement des jambons, chaque étage comprenant un support et ses récipients est présenté individuellement aux postes de chargement. Les étages sont empilés et la pile obtenue est manutentionnée, par des moyens adéquats de manutention. Ensuite, après la cuisson, on procède aux opérations inverses et les étages sont dégerbés.

Des ensembles empilables de récipients adaptés à ce procédé ont déjà été décrits dans les documents FR-A-2 599 341, FR-A-2 601 653 et EP-A-292 417. De manière générale, ces ensembles empilables comportent des goulottes longitudinales à profil en "U" disposées parallèlement côte à côte et montés sur des supports constitués de pieds. Ils sont généralement prévus pour que, lorsque deux ensembles sont empilés l'un sur l'autre, les fonds des goulottes de l'ensemble supérieur servent de couvercle pour les goulottes correspondantes de l'ensemble inférieur de celles-ci. Par ailleurs, on prévoit, sous chaque goulotte, des moyens qui forment un canal de ventilation et qui sont généralement rapportés directement sous les goulottes.

On connaît aussi un ensemble empilable de récipients comportant, sur la face supérieure du fond de chaque goulotte, un élément de section en forme de "U" tourné vers le bas de manière que les bords libres longitudinaux de ses ailes reposent sur le fond de chaque goulotte. L'élément à section transversale en U tourné vers le bas a des dimensions, largeur de l'âme et longueur, qui permettent l'écoulement des jus pendant la cuisson. D'autre part, les ailes de l'élément sont de hauteur variable choisie en fonction de l'épaisseur prévue du jambon cuit. L'inconvénient de cette disposition tient du fait qu'il faut choisir parmi les jeux d'éléments à section en U tourné vers le bas, ceux dont la hauteur des ailes convient à l'épaisseur des jambons à cuire. Ce choix à priori est quelquefois difficile. De plus, on est amené à prévoir des jeux importants d'éléments ayant des hauteurs d'ailes différentes.

Un objet de la présente invention consiste à éviter ces inconvénients et à prévoir des ensembles empilables du genre mentionné ci-dessus, qui comportent des améliorations sous la forme de moyens leur permettant de s'adapter plus facilement aux dimensions, notamment l'épaisseur, des produits à cuire.

Suivant une caractéristique de l'invention, il est prévu des ensembles empilables de récipients destinés à contenir des produits alimentaires pendant leur cuisson, du type qui comporte une pluralité de goulottes longitudinales à profil en U tourné vers le haut, ledit ensemble étant prévu pour que, lorsque deux ensembles sont empilés l'un sur l'autre, les fonds des goulottes de l'ensemble supérieur servent de couvercles aux goulottes correspondantes de l'ensemble inférieur, chaque goulotte étant munie d'un fond supplémentaire mobile sur lequel repose la partie inférieure du produit à cuire, entre le fond de la goulotte et ledit fond supplémentaire étant prévu un moyen élastique de rappel vers le haut.

Suivant une autre caractéristique, le moyen élastique est constitué par une lame ondulée de largeur inférieure à celle de la goulotte.

Suivant une autre caractéristique, le fond supplémentaire est constitué par une plaque plane d'une largeur légèrement inférieure à celle de la goulotte et d'une longueur légèrement inférieure à celle de la goulotte.

Suivant une autre caractéristique, la plaque du fond supplémentaire a ses bords longitudinaux légèrement relevés.

Suivant une autre caractéristique, la plaque du fond supplémentaire a ses bords longitudinaux tombant légèrement.

Suivant une autre caractéristique, la plaque du fond supplémentaire, au lieu d'être plane horizontale, a la forme du fond d'une gouttière, concave vers le haut, avec des bords longitudinaux tombant.

Suivant une autre caractéristique, la plaque du fond supplémentaire est pratiquement plane avec des bords longitudinaux légèrement relevés qui sont chacun prolongés par une partie descendante suivie d'une partie montante.

Les caractéristiques de la présente invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en perspective d'un exemple de réalisation d'un ensemble empilable,
la Fig. 2 est une vue partielle en coupe transversale de deux goulottes superposées munies chacune d'un fond supplémentaire, suivant l'invention, selon la ligne II-II de la Fig. 3,
la Fig. 3 est une vue partielle en coupe longitudinale des goulottes de la Fig. 2, selon la ligne III-III de la Fig. 2,
la Fig. 4 est une vue partielle en coupe transversale de deux goulottes superposée qui son chacune munies d'une variante du fond montré à la Fig. 2,
la Fig. 5 est une vue partielle en coupe analogue à celle des Figs. 2 et 4, mais avec une autre variante de fond supplémentaire, et
la Fig. 6 montre une autre variante de forme de fond.

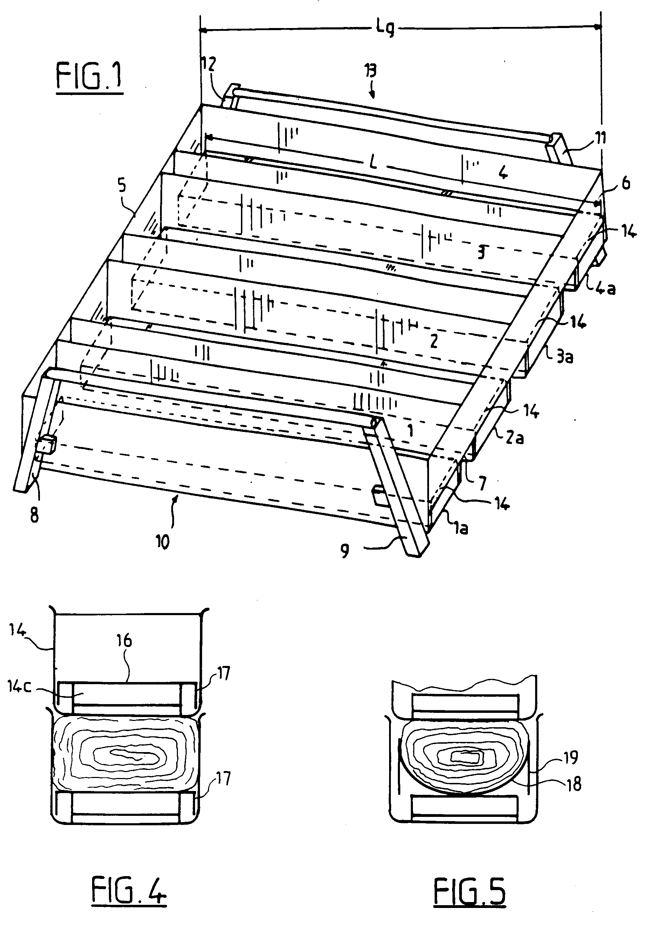

L'ensemble empilable de la Fig. 1 comprend quatre récipients 1 à 4 sous forme de goulottes longitudinales à profil en U qui sont disposées côte à côte. Ces goulottes sont solidarisées par une plaque verticale avant 5 et une plaque verticale arrière 6. Ces plaques ont leur arêtes supérieures sensiblement au même niveau que celles des parois latérales 1 à 4, mais leurs arêtes inférieures 7 sont à un niveau supérieur à celui des fonds la et 4a des goulottes 1 à 4 afin de ménager un espace entre ces niveaux.

A la paroi latérale externe de la goulotte 1, sont soudés, près de ses extrémités, deux pieds 8 et 9 identiques qui constituent un premier support 10. De même, à la paroi latérale externe de la goulotte externe 4, sont soudés deux pieds identiques 11 et 12 qui constituent un second support 13.

L'ensemble de la Fig. 1 est prévu pour être empilé sur un autre ensemble selon une technique qui est décrite dans les documents FR-A-2 599 341, FR-A-2 601 653 et EP-A-292 417.

Lorsque deux ensembles sont empilés, les fonds des goulottes supérieures forment des couvercles pour les goulottes inférieures. De plus, par leur poids ou/et à l'aide d'une force additionnelle, les fonds des goulottes supérieures tassent le produit qui cuit dans les goulottes inférieures.

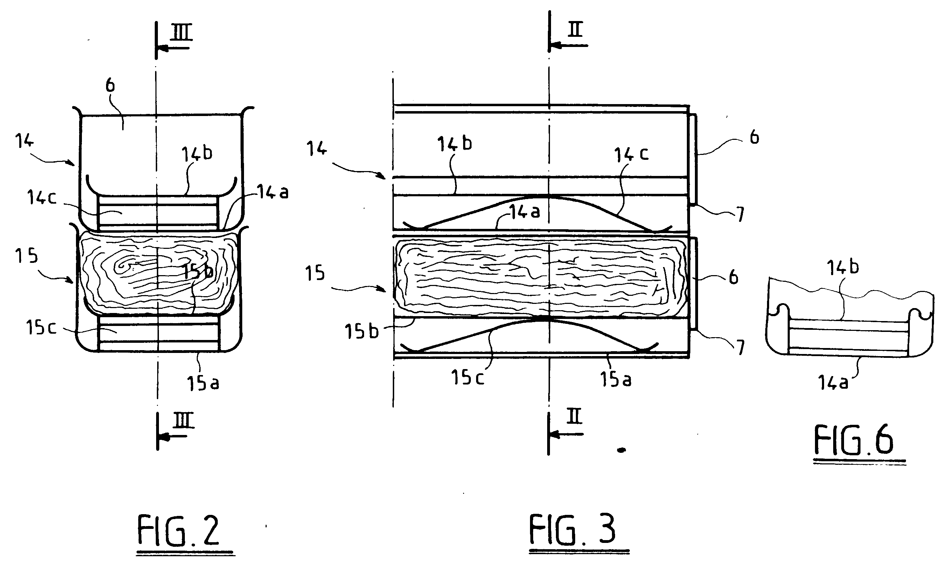

Aux Figs. 2 et 3, on a représenté schématiquement deux goulottes superposées 14 et 15. La goulotte 14 comporte, au-dessus de son fond 14a, un fond supplémentaire 14b. De même, la goulotte 15 comporte, au-dessus de son fond 15a, un fond supplémentaire 15b. Entre le fond supplémentaire 14b, ou 15b, et le fond classique 14a, ou 14b, d'une goulotte, est disposée une lame de ressort 14c, ou 15c. Ainsi, le produit, notamment le jambon à cuire dans la goulotte 14, ou, 15, est compressé, d'une part, par le fond de la goulotte supérieure et, d'autre part, par le fond supplémentaire qui tend à être soulevé par la lame de ressort.

Comme le montre la Fig. 2, le fond supplémentaire 14b, ou 15b, a une largeur inférieure à celle des goulottes. Comme le montre aussi la Fig. 3, la longueur du fond est inférieure à celle des goulottes. On crée ainsi des jeux qui permettent aux jus de cuisson, notamment des jambons, de s'écouler. Ils améliorent aussi l'échange thermique. Comme, par ailleurs, il existe des espaces, déjà mentionnés, entre les arêtes inférieures des arêtes 7 des plaques 5 et 6, et les fonds des goulottes, les jus de cuisson peuvent s'évacuer hors des goulottes. Ces jeux et ces espaces sont également utiles pendant les lavages des ensembles.

La Fig. 2 montre encore que les bords longitudinaux des fonds supplémentaires sont légèrement recourbés vers le haut, par exemple pour éviter toute fuite de la viande sur les côtés.

La Fig. 4 montre une variante du fond supplémentaire de la Fig. 2. Le fond 16 est encore pratiquement plan et ses bords longitudinaux 17 sont rabattus vers le bas. Cette variante permet la cuisson de jambons à section pratiquement rectangulaire.

La Fig. 5 montre une autre variante dans laquelle le fond n'est plus plan mais concave vers le haut, comme une gouttière 18, et présente des bords longitudinaux 19 qui tombent et qui assurent le guidage correct à l'intérieur de la goulotte. Cette variante permet la cuisson de jambons de forme ovalisée.

La Fig. 6 montre un autre exemple de réalisation où les bords longitudinaux relevés sont prolongés chacun par une partie descendante suivie d'une partie montante.

Enfin, la Fig. 3 montre que la lame de ressort peut présenter plusieurs ondulations sur la longueur de la goulotte.

A titre de variante, on peut prévoir de placer, entre le fond 14a et le fond supplémentaire 14b, une pluralité de ressorts à boudin.

## Revendications

1. Ensembles empilables de récipients destinés à contenir des produits alimentaires pendant leur cuisson, du type qui comporte une pluralité de goulottes (1 à 4) longitudinales à profil en U tourné vers le haut, ledit ensemble étant prévu pour que, lorsque deux ensembles sont empilés l'un sur l'autre, les fonds des goulottes (1a à 4a) de l'ensemble supérieur servant de couvercles aux goulottes correspondantes de l'ensemble inférieur, caractérisés en ce que chaque goulotte (1 à 4) est munie d'un fond supplémentaire (14b, 15b) mobile sur lequel repose la partie inférieure du produit à cuire, entre le fond de la goulotte (1a à 4a) et ledit fond supplémentaire (14) étant prévu un moyen élastique de rappel (14c, 15c) vers le haut.

2. Ensembles empilables suivant la revendication 1, caractérisés en ce que le moyen élastique (14c, 15c) est constitué par une lame ondulée de largeur inférieure à celle de la goulotte.

3. Ensembles empilables suivant la revendication 1 ou 2, caractérisés en ce que le fond supplémentaire (14b, 15b) est constitué par une plaque plane d'une largeur légèrement inférieure à celle de la goulotte et d'une longueur légèrement inférieure à celle de la goulotte.

4. Ensembles empilables suivant la revendication 3, caractérisés en ce que ladite plaque du fond supplémentaire a ses bords longitudinaux légèrement relevés.

5. Ensembles empilables suivant la revendication 3, caractérisés en ce que ladite plaque du fond supplémentaire a ses bords longitudinaux tombant légèrement.

6. Ensembles empilables suivant la revendication 2, caractérisés en ce que ladite plaque du fond supplémentaire, au lieu d'être plane horizontale, a la forme du fond d'une gouttière, concave vers le haut, avec des bords longitudinaux tombant.

7. Ensembles empilables suivant la revendication 4, caractérisés en ce que lesdits bords longitudinaux légèrement relevés sont chacun prolongés par une partie descendante suivie d'une partie montante.

## Claims

1. Stackable sets of containers intended to contain foodstuffs during their cooking, of a type comprising a plurality of longitudinal U-shaped troughs (1 to 4) facing upwards, said set being designed such that, when two sets are stacked on top of each other, the bases of the troughs (1a to 4a) of the upper set act as covers for the corresponding troughs in the lower set, characterized in that each trough (1 to 4) is equipped with an additional moveable base (14b, 15b) on which the lower part of the product to be cooked rests, an elastic raising means (14c, 15c) being provided between the base of the trough (1a to 4a) and said additional base (14).

2. Stackable sets according to claim 1, characterized in that the elastic means (14c, 15c) is constituted by a curved blade which is narrower than the trough.

3. Stackable sets according to claim 1 or 2, characterized in that the additional base (14b, 15b) is constituted by a flat sheet slightly narrower than the trough and slightly shorter than the trough.

4. Stackable sets according to claim 3, characterized in that said additional base sheet has slightly raised longitudinal edges.

5. Stackable sets according to claim 3, characterized in that said additional base sheet has slightly sloping longitudinal edges.

6. Stackable sets according to claim 2, characterized in that said additional base sheet, instead of being horizontally flat, is the shape of the base of a gutter, concave towards the top, with sloping longitudinal edges.

7. Stackable sets according to claim 4, characterized in that said slightly raised longitudinal edges are each extended by a descending part followed by a raised part.

## Patentansprüche

1. Stapelbare Einheit von Behältern zum Halten von Nahrungsmitteln während des Kochvorgangs, die mehrere längliche, u-förmige, nach oben gerichtete Ablaufrinnen (1 bis 4) aufweist, wobei vorgesehen ist, daß, wenn zwei Einheiten übereinander gestapelt sind, die Böden der Ablaufrinnen (1a bis 4a) der oberen Einheit als Deckel für die entsprechenden Ablaufrinnen der unteren Einheit dienen, dadurch gekennzeichnet, daß jede Ablaufrinne (1 bis 4) einen zusätzlichen beweglichen Boden (14b, 15b) aufweist, auf dem der untere Bereich des zu kochenden Nahrungsmittels aufliegt und wobei zwischen dem Boden der Ablaufrinne (1a bis 4a) und dem zusätzlichen Boden (14) ein nach oben wirkendes elastisches Federmittel (14c, 15c) angeordnet ist.

2. Stapelbare Einheit gemäß Anspruch 1, dadurch gekennzeichnet, daß das Federmittel (14c, 15c) aus einem gewellten Blech von geringerer Breite als die Ablaufrinne besteht.

3. Stapelbare Einheit gemäß Anspruch 1 oder 2, dadurch gekennzeichnet, daß der zusätzliche Boden (14b, 15b) aus einer ebenen Platte besteht, deren Breite etwas geringer ist als die der Ablaufrinne und deren Länge etwas geringer ist als die der Ablaufrinne.

4. Stapelbare Einheit gemäß Anspruch 3, dadurch gekennzeichnet, daß die Längsränder der Platte des zusätzlichen Bodens leicht nach oben angehoben sind.

5. Stapelbare Einheit gemäß Anspruch 3, dadurch gekennzeichnet, daß die Längsränder der Platte leicht nach unten abgesenkt sind.

6. Stapelbare Einheit gemäß Anspruch 2, dadurch gekennzeichnet, daß die zusätzliche Bodenplatte anstatt horizontal eben rinnenförmig konkav nach oben mit abfallenden Längsrändern ausgebildet ist.

7. Stapelbare Einheit gemäß Anspruch 4, dadurch gekennzeichnet, daß die leicht nach oben angehobenen Längsränder jeweils durch einen abfallenden Teil, an den sich ein ansteigender Teil anschließt, verlängert werden.
